# EUROPEAN PATENT APPLICATION

(11) **EP 4 787 285 A1**
(43) Date of publication of application: **05.08.2026**
(21) Application number: 25877660.8
(22) Date of filing: 05.09.2025
(51) Int. Cl.: G06Q 50/40, G06Q 30/01, G06F 16/901, G06F 16/903

(54) **SYSTEM AND METHOD FOR MANAGING BATTERY HISTORY INFORMATION**

(30) Priority: 07.10.2024 KR 20240135394
(71) Applicant: LG Energy Solution, Ltd., Seoul 07335 (KR)
(72) Inventor: KWON, Junghyun, Daejeon 34122 (KR); KOO, Jiyun, Daejeon 34122 (KR)
(74) Representative: Plasseraud IP
(86) International application number: PCT/KR2025/013822
(87) International publication number: WO 2026/079682

(57) **Abstract**

A battery history information management system according to an embodiment of the present invention includes a database in which a history information that a status information and a component information for a battery system are organized and generated for each battery system is stored; and a controller that generates a token information by combining a unique number and serial information for a specific battery system, searches the database for the history information of the specific battery system in response to a history information inquiry request signal for the specific battery system received from a user terminal, and provides the searched history information of the specific battery system, wherein the controller, in response to a request signal for checking a falsification or alteration of the specific battery system received from the user terminal, generates an information transmission request signal requesting transmission of a unique number, a serial information, and a token information assigned to the specific battery system to be transmitted to a recognition module, and uses a first unique number, a first serial information, and a first token information for the specific battery system received from the recognition module to check whether the specific battery system is falsified or forged.

## Description

### [Technical Field]

### CROSS-REFERENCE TO RELATED APPLICATION

This application claims priority to and the benefit of Korean Patent Application No. 10-2024-0135394 filed with the Korean Intellectual Property Office on October 7, 2024, the entire contents of which are incorporated herein by reference.

The present disclosure relates to a battery history information management system and a battery history information management method using the same.

### [Background Art]

The reuse and recycling of batteries is a critical challenge that must be addressed for future sustainable development. Modern society relies heavily on battery technology, which plays a key role in a variety of fields, including electric vehicles, smart devices, and energy storage systems (ESS).

Even after a battery has reached the end of its life, assessing its potential for reuse and managing it appropriately is a very important task. In particular, high-performance batteries such as lithium-ion batteries should be considered for reuse options that maximize their remaining capacity and performance rather than simply disposing of them. Since there may still be usable resources inside the battery, reusing it can reduce resource waste and minimize environmental impact.

To reuse the batteries, a system that may reliably manage the condition and history of each battery is essential. A thorough analysis of the initial performance of the battery, a damage existence during the use, and remaining charge cycles must be conducted to determine whether it can be reused. In other words, for the safe reuse of the batteries, the thorough management of the entire life cycle of the batteries is required. A system is needed to record and track all information about each battery, from its production stage through the performance changes during the use, a replacement timing, a damage history, and a final disposal.

### [Disclosure]

### [Technical Problem]

The purpose of the present disclosure is to provide a system and a method for managing a battery history information by using an information attached to an appearance of a battery system at the time of manufacturing the battery system.

### [Technical Solution]

A battery history information management system according to an embodiment of the present invention includes a database in which a history information that a status information and a component information for a battery system are organized and generated for each battery system is stored; and a controller that generates a token information by combining a unique number and serial information for a specific battery system, searches the database for the history information of the specific battery system in response to a history information inquiry request signal for the specific battery system received from a user terminal, and provides the searched history information of the specific battery system, wherein the controller, in response to a request signal for checking a falsification or forgery of the specific battery system received from the user terminal, generates an information transmission request signal requesting transmission of a unique number, a serial information, and a token information assigned to the specific battery system to be transmitted to a recognition module, and uses a first unique number, a first serial information, and a first token information for the specific battery system received from the recognition module to check whether the specific battery system is falsified or forged.

The controller may determine whether to generate the token information by using the entire unique number or using a part of the unique number based on the number of characters included in the unique number.

The controller may determine whether to generate the token information by using the entire serial information or using a part of the serial information based on the number of characters included in the serial information.

The controller may generate the token information by combining the unique number and the serial information according to a predetermined generation rule.

The controller may add inquiry details that the history information for the specific battery system is searched from the database to the history information of a corresponding battery system to update the history information.

The controller may search for a generation rule used when generating the token information of the specific battery system from the history information of the specific battery system stored in the database, apply the searched generation rule in reverse to obtain a second unique number and a second serial information from the first token information, and determine whether the specific battery system is falsified or forged based on whether the first unique number and the second unique number match and whether the first serial information and the second serial information match.

The controller, if the first unique number and the second unique number do not match, or the first serial information and the second serial information do not match, may determine that the specific battery system has been falsified or forged.

The controller may transmit the result of the checking whether the specific battery system is falsified or forged to the user terminal;

A method for managing a history information of a battery system by a battery history information management system according to an embodiment of the present invention includes generating, by a controller, an information transmission request signal requesting a transmission of a unique number, a serial information, and a token information assigned to a specific battery system in response to a request signal for checking a falsification or forgery for the specific battery system received from a user terminal, and transmitting the information transmission request signal to a recognition module by a controller; checking, by a controller, whether the specific battery system is falsified or forged by using the first unique number, the first serial information, and the first token information for the specific battery system received from the recognition module; and transmitting, by a controller, the result of the checking whether the specific battery system is falsified or forged and the history information to the user terminal, and adding the details and result of the checking whether the specific battery system is falsified or forged to the history information of the specific battery system to update the history information.

Checking whether the specific battery system is falsified or forged may include searching for an information on a generation rule used when generating the token information of the specific battery system from the history information of the specific battery system stored in a database; obtaining a second unique number and a second serial information from the first token information by applying the generation rule in reverse; and determining whether the specific battery system is falsified or forged based on whether the first unique number and the second unique number match and whether the first serial information and the second serial information match.

The method may further include generating a token information for a specific battery system by using a unique number and a serial information for the specific battery system received from the user terminal.

Generating the token information may include determining whether to generate the token information by using the entire unique number or a part of the unique number based on the number of characters included in the unique number by the controller; determining whether to generate the token information by using the entire serial information or a part of the serial information based on the number of characters included in the serial information; and generating the token information by combining the unique number and the serial information according to a preset generation rule.

The method may further includes generating a history information by organizing and listing a status information and a component information received from the user terminal for each said battery system.

Generating the history information may include additionally receiving the status information and the component information from the user terminal each time the status information and the component information are generated in the battery system, and updating the history information by adding the additionally received status information and component information to the history information of the corresponding battery system.

The method may further include in response to a request signal for the history information inquiry for the specific battery system received from the user terminal, searching, by the controller, for the history information of the specific battery system from a database; and providing, by the controller, the searched history information of the specific battery system to the user terminal.

Searching from the database and providing includes adding inquiry details of searching the history information of the specific battery system from the database to the history information of the corresponding battery system to update the history information.

### [Advantageous Effects]

According to one embodiment of the present invention, by tracking and managing the entire history of the battery from a production to a disposal, the reliability of the battery may be increased and a safe reuse may be ensured.

The effects that can be obtained from the present disclosure are not limited to the effects mentioned above, and other effects that are not mentioned can be clearly understood by a person having ordinary skill in the art to which the present disclosure belongs from the description below.

### [Description of the Drawings]

FIG. 1 is a diagram for explaining a process in which a battery history information management system according to one embodiment of the present disclosure communicates with a battery system, a user terminal, and a recognition module.
FIG. 2 is a block diagram of a battery history information management system according to one embodiment of the present disclosure.
FIG. 3 is a flowchart explaining a process of creating and managing a history information in a battery history information system.
FIG. 4 is a flowchart illustrating a process in which a battery history information management system examines a falsification of a battery system based on a history information stored in a database.
FIG. 5 is a flowchart of a battery history information management method according to one embodiment of the present disclosure.
FIG. 6 is a flowchart for a falsification check step according to one embodiment of the present disclosure.
Figure 7 is a flowchart of a battery history information management method according to one embodiment of the present disclosure.
Figure 8 is a flowchart of a token information generation step according to one embodiment of the present disclosure.

### [Mode for Invention]

In describing embodiments of the present specification, when it is determined that a detailed description of the well-known art associated with the present disclosure may obscure the gist of the present disclosure, it will be omitted. In addition, the attached drawings are only for easy understanding of exemplary embodiments disclosed in the present specification, and technical ideas disclosed in the present specification are not limited by the attached drawings, and it should be understood to include all modifications, equivalents, or substitutes included in the ideas and technical ranges of the present disclosure.

Terms including ordinal numbers such as first, second, and the like will be used only to describe various constituent elements, and are not to be interpreted as limiting these constituent elements. The terms are only used to differentiate one constituent element from other constituent elements.

Also, in this specification, it is to be understood that when one component is referred to as being "connected" or "coupled" to another component, it may be connected or coupled directly to another component or may be connected or coupled to another component with the other component intervening therebetween. On the other hand, in this specification, it is to be understood that when one component is referred to as being "connected or coupled directly" to another component, it may be connected or coupled to another component without the other component intervening therebetween.

It will be further understood that terms "comprises" and "have" used in the present specification specify the presence of stated features, numerals, steps, operations, constituent elements, parts, or a combination thereof, but do not preclude the presence or addition of one or more other features, numerals, steps, operations, constituent elements, parts, or a combination thereof.

Hereinafter, embodiments disclosed in this specification will be described in detail with reference to the attached drawings.

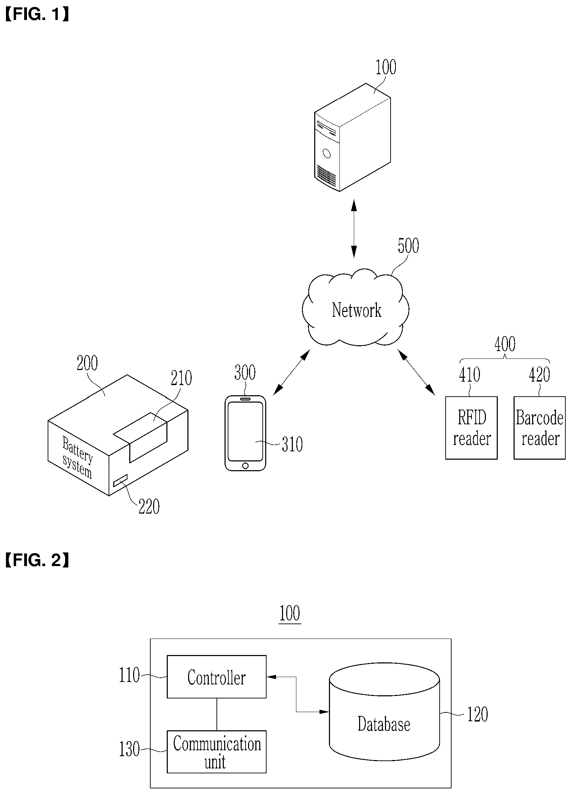

FIG. 1 is a drawing for explaining a process in which a battery history information management system 100 according to one embodiment of the present disclosure communicates with a battery system 200, a user terminal 300, and a recognition module 400.

Referring to FIG. 1, the battery history information management system 100 may communicate with the user terminal 300 and the recognition module 400 through a network.

The battery history information management system 100 is a system that stores and manages a history information for the battery system 200. Here, the history information means organizing and listing information generated about the battery system 200 from the time the battery system 200 was manufactured to the present.

The history information may include a status information about the status of the battery system 200 and a component information about components included in the battery system 200. Status information refers to an information about the status of the battery system 200 generated by the operation of the battery system 200, and may include a temperature of the battery cell, a SoH, a number of rapid charges, a number of slow charges, etc. The component information may include information on which components are included in the battery system 200, a manufacturing date of each component, whether each component needs to be replaced, a replacement date, etc.

At this time, the status information may be generated in the battery system 200, and the component information may be generated in the battery system 200 and the user terminal 300.

A battery history information management system 100 according to one embodiment can receive status information and component information of a battery system 200 from a user terminal 300. The battery history information management system 100 may create, store, and manage the history information by organizing and listing the status information and the component information. The battery history information management system 100 may receive a signal (hereinafter referred to as a "history information inquiry request signal") requesting the inquiry of the history information for the specific battery system 200 from the user terminal 300. The battery history information management system 100 may search for the history information about the corresponding battery system 200 in the database 120 in response to the history information inquiry request signal and provide the searched information to the user terminal 300.

The battery history information management system 100 according to one embodiment may receive a signal (hereinafter referred to as a "falsification check request signal") requesting a checking whether the specific battery system 200 has been falsified or forged from a user terminal 300. The battery history information management system 100 may respond to the falsification check request signal to check whether the corresponding battery system 200 has been falsified or forged, and provide the checking result to the user terminal 300.

The battery history information management system 100 may include a controller 110, a database 120, and a communication unit 130. The configuration of the battery history information management system 100 is described in detail below in FIG. 2.

The battery system 200 may include a battery pack and a battery management system (BMS). The battery pack may include a plurality of battery modules, each of which may include a plurality of battery cells. The BMS may be electrically connected to the plurality of battery modules as a configuration that monitors and controls the battery pack.

For example, the BMS may measure or predict the status of the battery cell and transmit the status information of the battery cell to the battery history information management system 100. The BMS may control the operation of the battery module by using the status information of the battery cells. For example, the BMS may perform a power limiting, a cell balancing, a cooling control, etc. for the battery module by using the cell voltage, the temperature, etc. of the battery module.

A security sticker 210 (a security seal) with a unique number may be attached to the exterior of the battery system 200 according to one embodiment. According to an embodiment, the security sticker 210 may be an RFID tag composed of an antenna, a chip, etc.

Here, the security sticker 210 is a security device used to ensure the integrity of the battery system 200, and may be a tag in a form of a sticker designed to check whether the battery system 200 has been opened or manipulated. The security sticker 210 leaves a trace when being physically damaged or removed, thereby preventing and warning of an illegal opening or a modification of the battery system 200.

The unique number is a unique serial number for identifying each security sticker 210 and may be used to verify the authenticity of the battery system 200 to which the security sticker 210 is attached. The unique number may be generated together with the security sticker 210 at the time of manufacturing the security sticker 210. For example, a security sticker 210 manufacturer may create a unique number at the time of manufacturing the security sticker 210 and assign a unique number to each security sticker 210. The unique number may be generated based on certain rules and formats specified by the security sticker 210 manufacturer.

The unique number assigned to the security sticker 210 attached to the exterior of the specific battery system 200 may be transmitted to the battery history information management system 100 via the user terminal 300 and stored in the history information of the corresponding battery system 200 by the battery history information management system 100.

For example, a battery system manufacturer may input the information about the unique number assigned to the security sticker 210 attached to the exterior of the specific battery system 200 and the information about the battery system 200 to which the security sticker 210 is attached into the user terminal 300. Thereafter, the user terminal 300 may transmit the information about the unique number and the information about the battery system 200 to which the security sticker 210 is attached to the battery history information management system 100. Thereafter, the battery history information management system 100 may store the information about the unique number assigned to the security sticker 210 attached to the specific battery system 200 in the history information of the battery system 200.

That is, since the unique number is assigned to each security sticker 210, and the unique number assigned to the security sticker 210 is stored in the battery history information management system 100 together with information about the battery system 200 to which the security sticker 210 is attached, the battery history information management system 100 may identify the battery systems 200 by using the security sticker 210, and based on this, the tracking and management of the battery systems 200 are possible.

According to an embodiment, the security sticker 210 may be attached to the exterior of each component included in the battery system 200. For example, the security sticker 210 may be attached to all components of the battery system 200, such as the battery cells, the battery modules, the battery packs, and the BMS included in the battery system 200, as well as the battery system 200.

According to one embodiment, a barcode area 220 in which a serial information and a token information are written may be provided on the exterior of the battery system 200. For example, the serial information and the token information in the form of a barcode may be written in the barcode area 220 provided on the exterior of the battery system 200.

Here, the serial information is a unique serial number for identifying each battery system 200, and may indicate the order in which the battery system 200 was manufactured, etc. At this time, the serial information may be generated for each battery system 200 at the time of manufacturing the battery system 200. For example, the battery system manufacturer may create the serial information at the time of manufacturing the battery system 200 and record the serial information for each battery system 200. The serial information may be generated based on certain rules and formats specified by the battery system manufacturer.

The serial information written in the barcode area 220 of the specific battery system 200 may be transmitted to the battery history information management system 100 via the user terminal 300 and stored in the history information of the corresponding battery system 200 by the battery history information management system 100.

For example, the battery system manufacturer may input the serial information written in the barcode area 220 of the specific battery system 200 and the information about the battery system 200 in which the serial information is written into the user terminal 300. Thereafter, the user terminal 300 may transmit the serial information and the information about the battery system 200 in which the serial information is written to the battery history information management system 100. Thereafter, the battery history information management system 100 may store the serial information assigned to the specific battery system 200 in the history information of the battery system 200.

That is, the serial information may be used for the purpose of identifying and tracking the specific battery system 200 among the battery systems 200 of the same model.

The token information is an information generated by combining the unique number and the serial information, and may be used to identify the battery system 200 or to check for falsification with the battery system 200. The token information may be generated through the battery history information management system 100, and the battery history information management system 100 may store the token information assigned to the specific battery system 200 in the history information of the corresponding battery system 200.

For example, the battery system manufacturer may input the unique number of the security sticker 210 attached to the battery system 200 and the serial information written in the barcode area 220 into the user terminal 300, and the user terminal 300 may transmit the input unique number and the serial information to the battery history information management system 100. Thereafter, the battery history information management system 100 may transmit the token information generated by combining the unique number and the serial information to the user terminal 300 and provide it to the battery system manufacturer. Thereafter, the battery system manufacturer may enter the provided token information in the barcode area 220 of the battery system 200. The process of generating the token information by combining the unique number and the serial information in the battery history information management system 100 is described in detail in FIG. 2 below.

According to an embodiment, the serial information and the token information may be described for each component included in the battery system 200. For example, the serial information and the token information may be described not only in the battery system 200, but also in all components of the battery system 200, such as the battery cells, the battery modules, the battery packs, and the BMS included in the battery system 200.

The battery system 200 according to one embodiment may generate the information about the battery system 200, i.e., the status information and the component information. For example, the BMS may generate a history of the status information of the battery cell obtained by measuring or predicting the status of the battery cell, and a history of controlling the operation of the battery module by using the status information of the battery cell as the status information,. As another example, the BMS may generate replacement details such as a replacement target and a replacement date when a component included in the battery system 200 is replaced as a component information.

The user terminal 300 may be a device capable of communicating with the battery history information management system 100. For example, the user terminal 300 may be a communication-capable computer, tablet PC, wireless phone, mobile phone, smart phone, smart watch, smart glass, portable game console, navigation device, etc.

According to one embodiment, the user terminal 300 may receive a command (hereinafter referred to as "information storage command") from the battery system manufacturer to store the status information and the component information of the specific battery system 200 in the history information of the battery system 200. For example, the user terminal 300 may control the status information and the component information stored in the battery system 200 to be transmitted to the battery history information management system 100. In addition, the user terminal 300 may generate a signal requesting the battery history information management system 100 to store the status information and the component information of the specific battery system 200 in the history information of the battery system 200 in response to an information storage command input from the user.

According to one embodiment, the user terminal 300 may receive a command (hereinafter referred to as a "history information inquiry command") from the user to inquire about the history information for the specific battery system 200. For example, a user may input a history information inquiry command by clicking a history information inquiry button provided through the display unit 310 of the user terminal 300 and inputting an information specifying one of the battery systems 200. The user terminal 300 may generate a history information inquiry request signal for the corresponding battery system 200 in response to the history information inquiry command input from the user. The user terminal 300 may provide the history information received from the battery history information management system 100 to the user through the display unit 310.

According to one embodiment, the user terminal 300 may receive a command (hereinafter referred to as a "falsification check command") from the user to check whether the specific battery system 200 has been falsified or forged. For example, the user may input a falsification check command by clicking a falsification check button provided through the display unit 310 of the user terminal 300 and inputting an information specifying one of the battery systems 200. The user terminal 300 may generate a falsification check request signal for the corresponding battery system 200 in response to the falsification check command input from the user. The user terminal 300 may provide the result of the falsification check for the specific battery system 200 received from the battery history information management system 100 to the user through the display unit 310.

The recognition module 400 is a device for recognizing an information attached to or written in the battery system 200. Here, the information attached to the battery system 200 refers to a unique number assigned to the security sticker 210, and the information written on the battery system 200 may refer to the serial information and the token information.

According to one embodiment, the recognition module 400 may receive a signal (hereinafter referred to as an "information transmission request signal") requesting the transmission of the unique number, the serial information, and the token information assigned to the specific battery system 200 from the battery history information management system 100. The recognition module 400 may obtain the unique number from the security sticker 210 attached to the exterior of the specific battery system 200 in response to the information transmission request signal, and obtain the serial information and the token information described in the specific battery system 200. Hereinafter, the unique number, the serial information, and the token information acquired by the recognition module 400 are defined as a first unique number, a first serial information, and a first token information, respectively. The recognition module 400 may transmit the first unique number, the first serial information, and the first token information to the battery history information management system 100.

According to an embodiment, the recognition module 400 may be an RFID reader 410. For example, if the security sticker 210 attached to the exterior of the battery system 200 is an RFID tag composed of an antenna and a chip, the RFID reader 410 may recognize the RFID tag and obtain the first unique number included in the RFID tag.

According to an embodiment, the recognition module 400 may be a barcode reader 420. For example, if the serial information and the token information described in the battery system 200 are barcodes, the barcode reader 420 may recognize the barcode described in the battery system 200 to obtain the first serial information and the first token information.

According to an embodiment, the recognition module 400 may be a device for acquiring an image of the battery system 200. The recognition module 400 may analyze the image of the battery system 200 to obtain the first unique number, the first serial information, and the first token information. In this case, the recognition module 400 may be the user terminal 300 or an image analysis device including a camera.

The network 500 refers to a connection structure that enables an information exchange between each node, such as the battery history information management system 100, the user terminal 300, and the recognition module 400. For example, the network 500 may include a local area network (LAN), a wide area network (WAN), the Internet (WWW), a wired or wireless data communication network, a telephone network, a wired or wireless television communication network, etc. The wireless data communication networks include3G, 4G, 5G, 3GPP (3rd Generation Partnership Project), LTE (Long Term Evolution), WIMAX (World Interoperability for Microwave Access), Wi-Fi, Bluetooth communication, infrared communication, ultrasonic communication, visible light communication (VLC), LiFi, etc., but are not limited thereto,

FIG. 2 is a block diagram of a battery history information management system 100 according to one embodiment of the present invention.

Referring to FIG. 2, the battery history information management system 100 according to one embodiment of the present disclosure may include a controller 110, a database 120, and a communication unit 130.

The controller 110 may generate the token information by combining the unique number and the serial information of the specific battery system 200 received from the user terminal 300. The token information generated in the controller 110 may be transmitted to the user terminal 300 and provided to the battery system manufacturer, and may be recorded in the battery system 200 by the battery system manufacturer. That is, the token information is an information that links an identification information (i.e., the serial information) for the specific battery system 200 and an identification information (i.e., the unique number) for the security sticker 210 attached to the battery system 200.

In an exemplary embodiment, the controller 110 may decide whether to generate token information using the entire unique number or only a part of it, based on the number of characters included in the unique number. For example, if the unique number contains ten or fewer characters (for instance, "1234567890"), the controller 110 may use the entire unique number ("1234567890") as is. If the unique number contains more than ten characters (for instance, "234890678902"), i.e., eleven or more characters, it may generate token information using the characters from the third through the tenth positions of the unique number ("48906789").

According to an embodiment, the controller 110 may determine whether to generate the token information by using the entire serial information or a part of the serial information, based on the number of characters included in the serial information. For example, if the number of characters included in the serial information is 17 or less (for example, if the serial information is 'AEK348KIO3WE234'), the controller 110 may use the entire serial information ('AEK348KIO3WE234') as is. If the number of characters included in the serial information is greater than 17 (for example, if the serial information is 'AEK34845KIO3321WE23344'), that is, 18 or more, the controller 110 may use the characters from the 6th to the 17th positions of the serial information ('845KIO3321WE') to generate the token information. As another example, if the number of characters included in the serial information is 18 or more, the controller 110 may generate the token information by using a value obtained by performing one-way encryption on the serial information using an initialization vector (IV).

According to an embodiment, the controller 110 may generate one token information by combining the unique number and the serial information according to a predetermined generation rule. Here, the generation rule refers to a rule used when generating the token information, and different generation rules may be applied to each battery system 200. The controller 110 may store an information about the generation rules applied to the generation of the token information assigned to the specific battery system 200 in the history information of the battery system 200.

For example, the controller 110 may generate the token information ('ABCDEFGHIJKL-1234567890') by using the generation rule that the serial information ('ABCDEFGHIJKL') is listed behind the unique number ('1234567890'). As another example, the controller 110 may divide the unique number ('1234567890') and the serial information ('ABCDEFGHIJKL') into two parts respectively, and generate the token information by using the generation rule that the first part of the unique number ('12345') - the first part of the serial information ('ABCDEF') - the last part of the unique number ('67890') - the last part of the serial information ('GHIJKL') are listed in order.

The controller 110 may receive the status information and the component information of the battery system 200 from the user terminal 300. The controller 110 may organize and list the status information and the component information for each battery system 200 to create the history information for each battery system 200, and may manage the created history information by distinguishing it for each battery system 200.

For example, the status information and the component information generated in the battery system 200 may be transmitted to the battery history information management system 100 via the user terminal 300, and the controller 110 of the battery history information management system 100 may generate the history information for each battery system 200 by classifying the status information and the component information for each battery system 200 and storing them in the database 120. In addition, the controller 110 may receive the status information and the component information additionally generated from the battery system 200, and may add the additionally generated status information and component information to the history information of the corresponding battery system 200 to update the history information stored in the database 120.

That is, the battery history information management system 100 may receive the information (the status information, the component information) about the specific battery system 200 from the battery system manufacturer at the time the specific battery system 200 is manufactured, and may create and store the history information about the corresponding battery system 200, and when the additional information about the corresponding battery system 200 is received from the owner or the user of the battery system 200 at any point during the sale, the transportation, or the use of the corresponding battery system 200, the additionally created information may be added to the history information of the corresponding battery system 200 to update the history information stored in the database 120.

The controller 110 may search for the history information about the specific battery system 200 in the database 120 in response to the history information inquiry request signal for the specific battery system 200 received from the user terminal 300. The controller 110 may transmit the history information searched in the database 120 to the user terminal 300. The controller 110 may update the history information by adding details (hereinafter referred to as "inquiry details") searched for the history information for the specific battery system 200 in the database 120 to the history information of the corresponding battery system 200. Here, the inquiry details may include the date on which the controller 110 received the history information inquiry request signal from the user terminal 300 and the inquiry result (e.g., a history information inquiry failure, success, etc.).

The controller 110 can receive a request signal for checking the falsification for the specific battery system 200 from the user terminal 300. In response to the falsification check request signal, the controller 110 may generate an information transmission request signal requesting the transmission of the unique number, the serial information, and the token information assigned to the corresponding battery system 200, and transmit the same to the recognition module 400. The controller 110 may receive the first unique number, the first serial information, and the first token information for the specific battery system 200 from the recognition module 400. The controller 110 may check whether the battery system 200 has been falsified or forged using the first unique number, the first serial information, and the first token information.

According to an embodiment, the controller 110 may search for the information on the generation rule used when generating the token information of the specific battery system 200 that is subject to the check for the falsification or forged from the history information of the corresponding battery system 200 stored in the database 120. The controller 110 may obtain a second unique number and a second serial information from the first token information by applying the searched generation rule in reverse. The controller 110 may determine whether the battery system 200 has been falsified or forged based on whether the first unique number and the second unique number match and whether the first serial information and the second serial information match.

For example, if the first unique number and the second unique number do not match, the controller 110 may determine that the battery system 200 has been falsified or forged. The fact that the first unique number obtained from the security sticker 210 attached to the battery system 200 does not match the second unique number obtained based on the history information stored in the database 120 means that the change of the security sticker 210 attached to the battery system 200 has not been reported to the battery history information management system 100, that is, the security sticker 210 attached to the battery system 200 has been changed by an unauthorized user, and thus the controller 110 may determine that the battery system 200 has not been legally opened and that the battery system 200 has been falsified or forged.

As another example, the controller 110 may determine that the battery system 200 has been falsified or forged if the first serial information and the second serial information do not match. The fact that the first serial information described in the battery system 200 and the second serial information obtained based on the history information stored in the database 120 do not match means that the change in the battery system 200 has not been reported to the battery history information management system 100. Therefore, if the first serial information does not match the second serial information, the controller 110 may determine that the battery system 200 has been changed by an unauthorized user and that the battery system 200 has been falsified or forged.

The controller 110 may transmit the results of the checking whether the battery system 200 has been falsified or forged and the history information to the user terminal 300. At this time, the owner or the manufacturer of the battery system 200 may replace the battery system 200 determined to be falsified or forged based on the checking result with a normal battery system 200. The controller 110 may update the history information by adding the falsification check details and the checking result for the specific battery system 200 to the history information of the battery system 200.

The controller 110 may control the communication with the user terminal 300 and the recognition module 400 through a network.

The history information may be stored in the database 120. At this time, the history information may be stored separately for each battery system 200. In the database 120, the unique number, the serial information, and the token information assigned to the battery system 200 may be stored separately for each battery system 200. In the database 120, the generation rules used when generating the token information of the battery system 200 may be stored separately for each battery system 200.

The communication unit 130 is configured to communicate with the user terminal 300 and the recognition module 400 through a network.

According to an embodiment, the communication unit 130 may receive the unique number, the serial information, the status information, the component information, the history information inquiry request signal, etc. from the user terminal 300. The communication unit 130 may transmit the token information and the history information about the specific battery system 200 searched in the database 120 to the user terminal 300.

According to an embodiment, the communication unit 130 may receive the falsification check request signal for the specific battery system 200 from the user terminal 300, and may receive the first unique number, the first serial information, and the first token information from the recognition module 400. The communication unit 130 may transmit the information transmission request signal to the recognition module 400, and may transmit the result of the check and the history information on whether the specific battery system 200 has been falsified or forged to the user terminal 300.

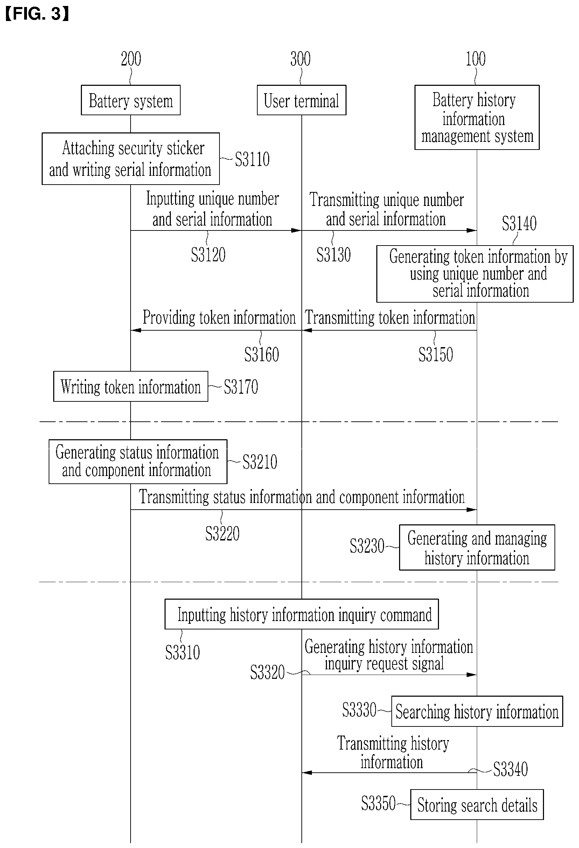

Figure 3 is a flowchart explaining a process of creating and managing a history information in a battery history information management system.

Referring to FIG. 3, a process of generating a token information through a battery history information management system 100 (S3110 to S3170), a process of generating a history information by using an information received from a user terminal 300 (S3210 to S3230), and a process of searching and transmitting the history information at a request of a user (S3310 to S3340) are illustrated.

The battery system manufacturer may attach a security sticker 210 to a manufactured battery system 200 and write a serial information on it (S3110). At this time, a unique number may be assigned to the security sticker 210. The unique number is generated by the manufacturer of the security sticker 210 and refers to an identification information assigned to the security sticker 210. The serial information is generated by the battery system manufacturer and refers to an identification information assigned to the battery system 200.

The battery system manufacturer may input the unique number and the serial information for the specific battery system 200 into the user terminal 300 (S3120).

The user terminal may transmit the unique number and the serial information for the specific battery system 200 received to the battery history information management system 100 (S3130). At this time, the battery system manufacturer may request a token information generation from the battery history information management system 100 through the user terminal 300.

The battery history information management system 100 may generate the token information for a specific battery system 200 by using the unique number and the serial information (S3140). For example, the battery history information management system 100 may generate the token information by simply combining the serial information with a unique number.

The battery history information management system 100 may transmit the generated token information to the user terminal 300 (S3150). At this time, the battery history information management system 100 may store the generated token information for the specific battery system 200 generated together with the creation rule used to generate the token information in the history information of the battery system 200.

The user terminal 300 may provide the token information for the specific battery system 200 to the battery system manufacturer (S3160).

The battery system manufacturer may record the provided token information in the corresponding battery system 200 (S3170).

The battery system 200 may generate a status information and a component information (S3210). The status information and component information may be generated continuously at the point when the battery system 200 is manufactured, at the point when it is sold and transported, and at the point when it is used by the owner.

The user terminal 300 may transmit the status information and the component information of the battery system 200 to the battery history information management system 100 (S3220).

The battery history information management system 100 may generate and manage a history information by organizing and listing the status information and the component information received from the user terminal 300 for each battery system 200 (S3230).

The user may input a history information inquiry command for the specific battery system 200 that is owned or used through the user terminal 300 (S3310).

The user terminal 300 may generate a history information inquiry request signal for the corresponding battery system 200 in response to the history information inquiry command input by the user and transmit the signal to the battery history information management system 100 (S3320).

The battery history information management system 100 may search the history information of the corresponding battery system 200 in the database 120 in response to the history information inquiry request signal received from the user terminal 300 (S3330).

The battery history information management system 100 may transmit the history information searched in the database 120 to the user terminal 300 (S3340). At this time, the user terminal 300 may provide the history information received from the battery history information management system 100 to the user.

The battery history information management system 100 may update the history information by adding the inquiry details obtained by searching the history information in the database 120 to the history information of the corresponding battery system 200 (S3350).

FIG, 4 is a flowchart for explaining a process of a battery history information management system 100 examining a falsification of a battery system 200 based on a history information stored in a database 120.

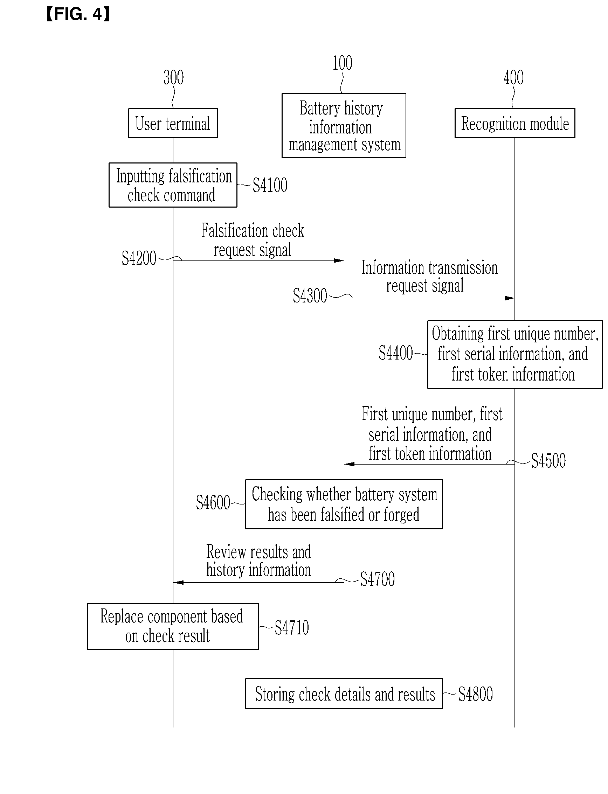

Referring to FIG. 4, the process of examining the falsification of the battery system 200 by using the history information stored in the database 120 in the battery history information management system 100 is illustrated.

The user may input the falsification check command for the specific battery system 200 into the user terminal 300 (S4100).

The user terminal 300 may generate a falsification check request signal for the corresponding battery system 200 in response to the falsification check command received from the user, and transmit it to the battery history information management system 100 (S4200).

The battery history information management system 100 may generate an information transmission request signal requesting the transmission of the unique number, the serial information, and the token information assigned to the corresponding battery system 200 in response to the falsification check request signal, and transmit this to the recognition module 400 (S4300).

The recognition module 400 may obtain a unique number from the security sticker 210 attached to the exterior of the specific battery system 200 in response to the information transmission request signal, and obtain the serial information and the token information described in the specific battery system 200 (S4400). At this time, the unique number, the serial information, and the token information acquired by the recognition module 400 are defined as the first unique number, the first serial information, and the first token information, respectively.

The recognition module 400 may transmit the first unique number, the first serial information, and the first token information for the specific battery system 200 to the battery history information management system 100 (S4500).

The battery history information management system 100 may check whether the battery system 200 has been falsified or forged using the first unique number, the first serial information, and the first token information (S4600).

According to an embodiment, the battery history information management system 100 may check whether the battery system 200 has been falsified or forged through the following process.

First, the battery history information management system 100 may search for an information on a generation rule used when generating the token information of the specific battery system 200 that is subject to check for the falsification or forgery from the history information of the corresponding battery system 200 stored in the database 120 (S4610).

Next, the battery history information management system 100 may obtain the second unique number and the second serial information from the first token information by applying the searched generation rule in reverse (S4620).

Next, the battery history information management system 100 may determine whether the battery system 200 has been falsified or forged based on whether the first unique number and the second unique number match and whether the first serial information and the second serial information match (S4630).

The battery history information management system 100 may transmit the results of the checking whether the battery system 200 has been falsified or forged and the history information to the user terminal 300 (S4700).

According to an embodiment, the owner or manufacturer of the battery system 200 who has received the result of the check for the falsification through the user terminal 300 may replace the battery system 200 which has been determined to be falsified or forged based on the result of the check with a normal battery system 200 (S4710).

The battery history information management system 100 may update the history information by adding the falsification check details and the checking result for the specific battery system 200 to the history information of the battery system 200 (S4800).

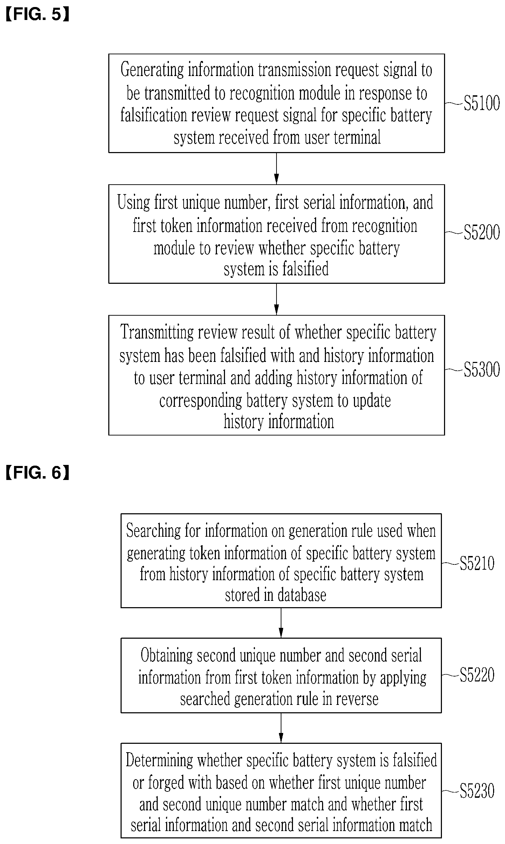

Figure 5 is a flowchart of a battery history information management method according to one embodiment of the present invention.

Referring to FIG. 5, a battery history information management method according to one embodiment of the present disclosure may include a falsification check request (S5100), a falsification check (S5200), and a checking result transmission (S5300).

In the falsification check request (S5100), the controller 110 may receive a falsification check request signal for the specific battery system 200 from the user terminal 300. The controller 110 may generate an information transmission request signal requesting the transmission of the unique number, the serial information, and the token information assigned to the specific battery system 200 in response to the falsification check request signal. The controller 110 may transmit the information transmission request signal to the recognition module 400.

In the falsification check (S5200), the controller 110 may receive the first unique number, the first serial information, and the first token information for the specific battery system 200 from the recognition module 400. The controller 110 may check whether the specific battery system 200 has been falsified or forged using the first unique number, the first serial information, and the first token information.

Figure 6 is a flowchart for a falsification check according to one embodiment of the present invention.

The falsification check step (S5200) may include searching for an information on a generation rule used when generating a token information of a specific battery system 200 from a history information of the specific battery system 200 stored in a database 120 (S5210), obtaining a second unique number and a second serial information from the first token information by applying the searched generation rule in reverse (S5220), and determining whether the specific battery system is falsified or forged based on whether the first unique number and the second unique number match and whether the first serial information and the second serial information match (S5230).

In the checking result transmission S5300, the controller 110 may transmit the checking result for whether the battery system 200 has been falsified or forged and the history information to the user terminal 300. The controller 110 may update the history information by adding the falsification check details and the checking result for the specific battery system 200 to the history information of the battery system.

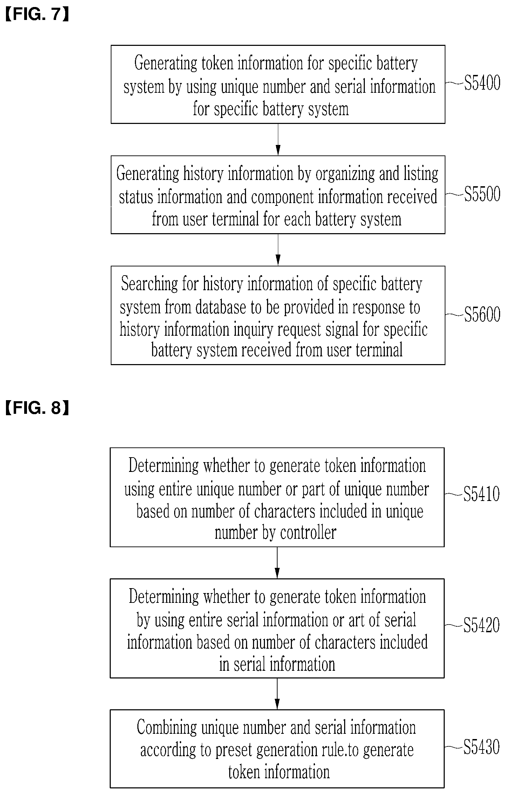

Figure 7 is a flowchart of a battery history information management method according to one embodiment of the present invention.

Referring to FIG. 7, the battery history information management method may further include a token information generation (S5400), a history information generation (S5500), and/or a history information provision (S5600).

In the token information generation (S5400), the controller 110 may generate the token information for the specific battery system 200 by using the unique number and the serial information for the specific battery system 200 received from the user terminal 300.

Figure 8 is a flowchart of a token information generation according to one embodiment of the present invention.

The token information generation (S5400) may include determining whether to generate the token information using the entire unique number or a part of the unique number based on the number of characters included in the unique number by the controller 110 (S5410), determining whether to generate the token information by using the entire serial information or a part of the serial information based on the number of characters included in the serial information by the controller (S5420), combining the unique number and the serial information according to a preset generation rule.to generate the token information (S5430).

In the history information generation (S5500), the controller 110 may generate the history information by organizing and listing the status information and the component information received from the user terminal 300 for each battery system 200.

According to an embodiment, the history information generation (S5500) may include additionally receiving the status information and the component information from the user terminal 300 whenever the status information and the component information are generated in the battery system 200, and adding the additionally received status information and component information to the history information of the corresponding battery system 200 to update the history information by the controller 110.

In the history information provision (S5600), the controller 110 may search for the history information of the specific battery system 200 in the database 120 and provide it in response to a history information inquiry request signal for the specific battery system 200 received from the user terminal 300.

The history information provision (S5600) may include adding the inquiry details that the controller 110 searches for history information of the specific battery system 200 from the database 120 to the history information of the corresponding battery system 200 to update the history information.

Meanwhile, the above-described method may be written as a program that may be executed on a computer, and may be implemented in a general-purpose digital computer that operates the program by using a computer-readable recording medium. The computer-readable recording medium may include a storage medium such as a magnetic storage medium such as ROM, RAM, USB, floppy disk, hard disk, or an optical readable medium such as CD-ROM or DVD.

The scope of the present disclosure is indicated by the claims described below rather than the detailed description above, and all changes or modifications derived from the meaning and scope of the claims and their equivalent concepts should be interpreted as being included in the scope of the present invention.

## Claims

1. A battery history information management system comprising:
a database in which a history information is stored that is generated by organizing, for each battery system, status information and component information for a battery system; and
a controller configured to generate a token information by combining a unique number and serial information for a specific battery system, search the database for the history information of the specific battery system in response to a history information inquiry request signal for the specific battery system received from a user terminal, and provide the searched history information of the specific battery system,
wherein the controller, in response to a request signal for checking a falsification or alteration of the specific battery system received from the user terminal, generates an information transmission request signal requesting transmission of a unique number, a serial information, and a token information assigned to the specific battery system to be transmitted to a recognition module, and uses a first unique number, a first serial information, and a first token information for the specific battery system received from the recognition module to check whether the specific battery system is falsified or forged. .

2. The battery history information management system of claim 1, wherein: the controller determines whether to generate the token information by using the entire unique number or using a part of the unique number based on the number of characters included in the unique number. .

3. The battery history information management system of claim 1, wherein:
the controller determines whether to generate the token information by using the entire serial information or using a part of the serial information based on the number of characters included in the serial information.

4. The battery history information management system of claim 1, wherein:
the controller generates the token information by combining the unique number and the serial information according to a predetermined generation rule.

5. The battery history information management system of claim 1, wherein:
the controller adds inquiry details that the history information for the specific battery system is searched from the database to the history information of a corresponding battery system to update the history information.

6. The battery history information management system of claim 1, wherein:
the controller searches for a generation rule used when generating the token information of the specific battery system from the history information of the specific battery system stored in the database, applies the searched generation rule in reverse to obtain a second unique number and a second serial information from the first token information, and determines whether the specific battery system is falsified or forged based on whether the first unique number and the second unique number match and whether the first serial information and the second serial information match.

7. The battery history information management system of claim 6, wherein:
the controller, if the first unique number and the second unique number do not match, or the first serial information and the second serial information do not match, determines that the specific battery system has been falsified or forged.

8. The battery history information management system of claim 1, wherein:
the controller transmits the result of the checking whether the specific battery system is falsified or forged to the user terminal;

9. A method for managing a history information of a battery system by a battery history information management system comprising:
generating, by a controller, an information transmission request signal requesting a transmission of a unique number, a serial information, and a token information assigned to a specific battery system in response to a request signal for checking a falsification for the specific battery system received from a user terminal, and transmitting the information transmission request signal to a recognition module by a controller;
checking, by a controller, whether the specific battery system is falsified or forged by using the first unique number, the first serial information, and the first token information for the specific battery system received from the recognition module; and
transmitting, by a controller, the result of the checking whether the specific battery system is falsified or forged and the history information to the user terminal, and adding the details and result of the checking whether the specific battery system is falsified or forged to the history information of the specific battery system to update the history information.

10. The method for managing the history information of the battery of claim 9, wherein:
checking whether the specific battery system is falsified or forged includes
searching for an information on a generation rule used when generating the token information of the specific battery system from the history information of the specific battery system stored in a database;
obtaining a second unique number and a second serial information from the first token information by applying the generation rule in reverse; and
determining whether the specific battery system is falsified or forged based on whether the first unique number and the second unique number match and whether the first serial information and the second serial information match.

11. The method for managing the history information of the battery of claim 9, further comprising:
generating a token information for a specific battery system by using a unique number and a serial information for the specific battery system received from the user terminal.

12. The method for managing the history information of the battery of claim 11, wherein:
generating the token information includes
determining whether to generate the token information by using the entire unique number or a part of the unique number based on the number of characters included in the unique number by the controller;
determining whether to generate the token information by using the entire serial information or a part of the serial information based on the number of characters included in the serial information; and
generating the token information by combining the unique number and the serial information according to a preset generation rule.

13. The method for managing the history information of the battery of claim 9, further comprising:
generating a history information by organizing and listing a status information and a component information received from the user terminal for each said battery system.

14. The method for managing the history information of the battery of claim 13, wherein:
generating the history information includes
additionally receiving the status information and the component information from the user terminal each time the status information and the component information are generated in the battery system, and updating the history information by adding the additionally received status information and component information to the history information of the corresponding battery system.

15. The method for managing the history information of the battery of claim 9, further comprising:
in response to a request signal for the history information inquiry for the specific battery system received from the user terminal, searching, by the controller, for the history information of the specific battery system from a database; and
providing, by the controller, the searched history information of the specific battery system to the user terminal.

16. The method for managing the history information of the battery of claim 15, wherein:
searching from the database and providing includes
adding inquiry details of searching the history information of the specific battery system from the database to the history information of the corresponding battery system to update the history information.
